# EUROPÄISCHE PATENTSCHRIFT

(11) **EP 2 292 358 B1**
(45) Veröffentlichungstag und Bekanntmachung des Hinweises auf die Patenterteilung: **28.11.2012**
(21) Anmeldenummer: 10007839.3
(22) Anmeldetag: 28.07.2010
(51) Int. Cl.: B23B 31/00, B23B 31/02, B23B 31/20, B23Q 5/04, B23B 29/04

(54) **Vorrichtung mit einer Aufnahme für ein spanendes Werkzeug**
Device with a holder for a cutting tool
Dispositif doté d'une réception pour un outil de coupe

(30) Priorität: 04.09.2009 DE 102009040266
(43) Veröffentlichungstag der Anmeldung: 09.03.2011
(73) Patentinhaber: heimatec GmbH Präzisionswerkzeuge, 77871 Renchen (DE)
(72) Erfinder: Fiedler, Harald, Dipl.-Ing., 77652 Offenburg (DE)
(74) Vertreter: Maucher, Wolfgang

(56) Entgegenhaltungen:
- EP-A1- 1 358 960
- WO-A2-2004/078391
- DE-A1- 3 916 315
- DE-A1-102005 040 587

## Beschreibung

Die Erfindung betrifft einen Satz bestehend aus einer Spannzange, einem Werkzeugträger-Einsatz und einer Vorrichtung zur Aufnahme der Spannzange oder des Werkzeugträger-Einsatzes mit einer eine konische Aufnahmeöffnung aufweisenden Aufnahme für ein spanendes Werkzeug, wobei zu der Vorrichtung die Spannzange zum Fixieren des Werkzeugs und eine Spannzangenbefestigung gehören, wobei die Spannzange in die konische Aufnahmeöffnung passt, welche wahlweise die Spannzange oder einen Konusabschnitt des Werkzeugträger-Einsatzes aufnimmt, und wobei für den Werkzeugträger-Einsatz eine Drehmomentenübertragung mit Formschluss vorgesehen ist.

Eine vergleichbare Vorrichtung ist aus DE 89 10 774 U1 bekannt. Als Werkzeughalter ist dabei jeweils eine Spannzange vorgesehen, die drehmomentübertragend aufgenommen wird und die in ein zugeordnetes Spannzangenfutter passt und dort einsetzbar ist, so dass die jeweilige ein Werkzeug aufnehmende Spannzange gegen einen gleichdimensionierte andere Spannzange ausgetauscht werden kann. Somit sind jeweils unterschiedliche Werkzeuge mit Spannzangen zu befestigen, wodurch die Einsatzmöglichkeit beschränkt ist.

Aus DE 20 2007 013 371 U1 ist ein Werkzeugadapter bekannt, der maschinenseitig einen Kegelabschnitt hat. Ein Ausführungsbeispiel gemäß Figur 6 von DE 20 2007 013 371 U1 sieht eine doppeltkonische Spannzange vor. Die wahlweise Aufnahme eines Konusabschnittes oder einer Spannzange ist dabei nicht vorgesehen. Die Befestigung des Adapters oder Werkzeughalters erfolgt dabei mit einander diametral gegenüberliegenden einsetzbaren Halteschrauben, so dass eine seitliche Zugänglichkeit erforderlich ist und der Befestigungsaufwand wegen der Notwendigkeit, zwei derartige Befestigungsschrauben anziehen zu müssen, hoch ist.

Aus der DE 10 2005 040 087 A1 ist ein vergleichbarer Satz der eingangs genannten Art bekannt, wobei der Formschluss für eine Drehmomentenübertragung an einem Abschnitt eines Vorsprungs des Werkzeugs vorgesehen ist, der sich in axialer Richtung an den Konusabschnitt anschließt, also den Konusabschnitt entsprechend verlängert. Eine entsprechend große Einbaulänge ist erforderlich.

Eine vergleichbare Anordnung zeigt DE 39 16 315 A1, bei welcher allerdings ein unrunder Bereich dem größeren Querschnitt des Konusabschnittes benachbart, wiederum unabhängig von diesem angeordnet ist und eine entsprechend aufwendige Fertigung erforderlich macht und eine entsprechend große axiale Länge der gesamten Anordnung ergibt.

Für die Befestigung ist dabei ein pilzförmiger Körper im Endbereicn des Konusabschnittes erforderlich, der durch seitliche Halteelemente zu erfassen ist.

Es besteht deshalb die Aufgabe, einen Satz der eingangs genannten Art zu schaffen, womit es möglich ist, schnell und ohne die Verwendung spezieller Befestigungselemente an der zu dem Satz gehörenden Vorrichtung Werkzeuge austauschen zu können, wobei auch der Austausch der Spannzange gegen den Werkzeugträger-Einsatz schnell und einfach durchführbar sein soll.

Zur Lösung dieser Aufgabe ist vorgesehen, dass der in die konische Aufnahmeöffnung für die Spannzange passende Konusabschnitt des Werkzeugträger-Einsatzes so gestaltet ist, dass er in Gebrauchsstellung zumindest mit Hilfe des Gewindes der Spannzangenbefestigung festlegbar ist, und dass als Drehmomentenübertragung die konische Aufnahmeöffnung für die Spannzange einerseits und der formschlüssig in diese passende Konusabschnitt des Werkzeugträger-Einsatzes andererseits an in Montagestellung übereinstimmender Stelle oder in derselben Tiefe einen formschlüssig zusammenpassenden unrunden Querschnitt haben, wobei die konische Aufnahmeöffnung zur Bildung der unrunden Stelle wenigstens eine Querschnittserweiterung hat.

Auf diese Weise ergibt sich eine Vorrichtung der eingangs genannten Art, mit welcher einerseits wahlweise die zu der Vorrichtung gehörende übliche Spannzange für dazu passende Werkzeuge und andererseits ein Werkzeugträger-Einsatz verwendet werden kann, der anstelle der Spannzange in deren konische Aufnahmeöffnung passt und darin auch eine in Drehrichtung formschlüssige Verbindung für eine Übertragung eines hohen Drehmoments erhält, wobei der Austausch der Spannzange gegen den Werkzeugträger-Einsatz schnell und einfach durchführbar ist, weil zumindest das Gewinde der Spannzangenbefestigung auch für die Befestigung des Werkzeugträger-Einsatzes mitbenutzbar ist. Spezielle, einander diametral gegenüberliegende und radial einschraubbare Halteschrauben oder gegebenenfalls stirnseitig einsetzbare Halteschrauben mit entsprechenden Gewindeöffnungen werden vermieden. Ebenso wird vermieden, eine formschlüssige Drehmomentenübertragung an einem stirnseitigen Rand der konischen Aufnahmeöffnung anzuordnen, wo eine erhöhte Verschmutzungs- und Beschädigungsgefahr besteht.

Am Umfang der konischen Aufnahmeöffnung kann innerhalb von deren konischem Verlauf oder Bereich zur Bildung einer unrunden Stelle oder eines unrunden Bereichs wenigstens eine Erweiterung oder Ausfräsung vorgesehen sein, deren Wandung eine geringere Konizität als die konische Aufnahmeöffnung hat und/oder eine zur Mittelachse koaxiale gekrümmte Fläche bildet. Es kann also in dem konischen Bereich der konischen Aufnahmeöffnung, in welcher üblicherweise eine Spannzange einsetzbar ist, eine Querschnittserweiterung eingearbeitet oder ausgefräst werden, die stellenweise, was die axiale Ausdehnung als auch die Umfangsausdehnung betrifft, zu einer Abweichung von dem Innenkonus der Aufnahmeöffnung führt. Dabei wird gleichzeitig dadurch, dass eine geringere Konizität oder eine koaxiale Ausrichtung des entsprechenden Wandabschnitts vorgesehen wird, eine Hinterschneidung in Einsteckrichtung vermieden, die aber gegebenenfalls auch denkbar wäre.

Eine besonders vorteilhafte Ausführungsform der Erfindung kann vorsehen, dass der unrunde Bereich für die Drehmomentenübertragung im Querschnitt als Polygon mit wenigstens drei im Winkel zueinander angeordneten, insbesondere balligen Flächen ausgebildet ist, wobei die den Eckbereichen des Polygons zwischen den balligen Flächen im Querschnitt entsprechenden Bereiche dieses Polygons die Erweiterung oder Ausfräsung des Querschnitts des konischen Bereiches der Aufnahmeöffnung sind oder diesem entsprechen, und dass der Werkzeugträger-Einsatz ein in Gebrauchsstellung zumindest in diesen Bereichen formschlüssig dazu passendes Polygon hat.

Es ist im Maschinenbau bekannt, dass solche Polygon-Kupplungen oder Verbindungen oder Ausbildungen von ein Drehmoment übertragenden Teilen einerseits eine gute Montage und andererseits eine Übertragung eines hohen Drehmoments erlauben. Dies kann bei der erfindungsgemäßen Vorrichtung ausgenutzt werden. Da der unrunde oder polygonale Bereich in axialer Richtung nur einen Bruchteil der axialen Länge der konischen Aufnahmeöffnung umfasst, bevorzugt weniger als die Hälfte dieser axialen Länge oder etwa ein Drittel oder ein Viertel dieser Länge oder noch weniger, bleibt eine genügend große Wandfläche im Inneren der konischen Aufnahmeöffnung zum Zusammenwirken mit einer üblichen Spannzange erhalten.

Die polygonale unrunde Stelle der konischen Aufnahmeöffnung kann wenigstens drei abgerundete Eckbereiche aufweisen, zwischen denen in Umfangsrichtung des polygonalen Querschnitts insbesondere ballige Flächenbereiche verlaufen, die jeweils zumindest bezüglich einer Mantellinie Fortsetzungen der konischen Aufnahmeöffnung sind und eine in die Aufnahmeöffnung eingesetzte Spannzange in diesem polygonal gestalteten Querschnittsbereich berühren. Somit kann auch in dem unrunden Bereich oder an der unrunden Stelle die Außenseite einer Spannzange zumindest stellenweise berührt werden, was zu einem entsprechend guten Zusammenwirken der konischen Aufnahmeöffnung mit einer zu ihr passenden Spannzange trotz der unrunden Stelle führt.

Die im Querschnitt unrunde Stelle oder der unrunde Bereich kann an demjenigen Ende der konischen Aufnahmeöffnung angeordnet sein, welches den geringsten Querschnitt hat. Zwar könnte dieser unrunde Bereich auch in einem mittleren Abschnitt oder am anderen Ende der konischen Aufnahmeöffnung angeordnet sein, jedoch ergibt sich der geringste Herstellungsaufwand bei einer Anordnung am Ende der konischen Aufnahmeöffnung, wo sich dann ein entsprechender Auslauf in Form beispielsweise einer sich anschließenden zylindrischen Fortsetzung ergibt, was einer Herstellung insbesondere durch Fräsen der unrunden Stelle förderlich ist.

Gleichzeitig kann die konische Aufnahmeöffnung an ihrem offenen axialen Ende und auch in ihrem weiteren Verlauf bis zu dem unrunden Bereich jeweils einen kreisrunden Querschnitt haben. Dies ergibt eine entsprechend gleichmäßige Beaufschlagung einer Spannzange und ebenso auch eine entsprechend gleichmäßige Erfassung eines im Querschnitt entsprechend kreisförmigen Konusabschnittes eines Werkzeugträger-Einsatzes.

Die mit unrundem Querschnitt ausgebildete Stelle kann bis zu dem Ende der konischen Aufnahmeöffnung reichen und durch dieses Ende abgeschlossen sein. Der unrunde Bereich bildet also in axialer Richtung das äußerste Ende der konischen Aufnahmeöffnung an ihrer engsten Stelle, so dass die Anpassung des einzusetzenden Werkzeugträger-Einsatzes in Drehrichtung an diese unrunde Stelle erst am Ende der Einsetzbewegung erforderlich ist. Darüber hinaus ist an dieser Stelle, wie schon erwähnt, das Herausarbeiten von Material aus der eigentlich konischen Aufnahmeöffnung einfacher als an einer anderen Stelle dieser Aufnahmeöffnung.

Dabei ist es zweckmäßig, wenn in Fortsetzung der konischen Aufnahmeöffnung eine zylindrisch gestaltete Öffnung vorgesehen ist, deren Durchmesser dem kleinsten Durchmesser der konischen Aufnahmeöffnung entspricht. Eine derartige zylindrische Fortsetzung einer konischen Aufnahmeöffnung für eine Spannzange ist an sich bekannt und kann auch bei der erfindungsgemäßen Anordnung vorgesehen sein mit dem zusätzlichen Vorteil, das Ausarbeiten der unrunden Stelle zu begünstigen.

In vorteilhafter Weise ist der in die konische Aufnahmeöffnung für die Spannzange passende Werkzeugträger-Einsatz so gestaltet, dass er mit Hilfe desjenigen Gewindes der Spannzangenbefestigung in Gebrauchsstellung festlegbar ist, mit welchem die Spannzange in der Aufnahmeöffnung befestigbar ist. Somit brauchen für die Befestigung des Werkzeugträger-Einsatzes keine besonderen Befestigungsmittel an der Vorrichtung und im Bereich der konischen Aufnahmeöffnung wie zum Beispiel quer verlaufende Schrauben oder am stirnseitigen Rand der Aufnahmeöffnung anzubringende Schrauben vorgesehen zu werden. Vielmehr kann das für eine Überwurfmutter oder eine Druckschraube vorgesehene Gewinde im Bereich der konischen Aufnahmeöffnung, womit eine Spannzange fixiert und gespannt werden kann, auch zur Befestigung des Werkzeugträger-Einsatzes ausgenutzt werden.

Dabei ist es besonders vorteilhaft, wenn der in die konische Aufnahmeöffnung passende Werkzeugträger-Einsatz so gestaltet ist, dass er mit Hilfe der zum Befestigen der Spannzange in der konischen Aufnahmeöffnung dienenden Verschraubung, insbesondere mit einer zu einem im Bereich der Aufnahmeöffnung angeordneten Gegengewinde passenden Überwurfmutter oder einer zu einem Gegengewinde passenden Druckschraube festlegbar ist. Bei einer derartigen Ausgestaltung kann dann sogar die Überwurfmutter oder Druckschraube der Spannzangenbefestigung auch bei der Fixierung des Werkzeugträger-Einsatzes benutzt werden, so dass keinerlei Vorkehrungen für die Befestigung des an die Stelle einer Spannzange tretenden Werkzeugträger-Einsatzes notwendig werden.

Für Werkzeugträger-Einsätze, die in ihrem aus der Aufnahme oder Aufnahmeöffnung überstehenden axialen Abschnitt einen größten Querschnitt haben, welcher gleich oder kleiner als der Querschnitt der Durchgangsöffnung einer Überwurfmutter oder Druckschraube zur Befestigung der Spannzange ist, kann dieselbe zur Befestigung der Spannzange dienende Überwurfmutter oder Druckschraube auch zur Befestigung des Werkzeugträger-Einsatzes vorgesehen sein.

Hat jedoch der Werkzeugträger-Einsatz in seinem überstehenden axialen Abschnitt einen größeren Querschnitt als der Durchgang durch die Spannschraube oder Überwurfmutter, kann an diesem eine axialer Richtung mittels Haltering fixierte Spannschraube oder Überwurfmutter drehbar und axial festliegend vorgesehen sein, deren Gewinde zu dem Gewinde der Überwurfmutter oder Druckschraube für die Befestigung der Spannzange passt. Somit kann auch in dem Falle, dass eine Druckschraube oder Überwurfmutter nicht über den Werkzeugträger-Einsatz hinweg zugeführt werden kann, dennoch eine nahezu übereinstimmende Art der Befestigung des Werkzeugträger-Einsatzes durchgeführt werden, wie auch die Spannzange zu befestigen ist. Auf jeden Fall wird dabei wiederum das Gewinde der Spannzangenbefestigung ausgenutzt.

Der Werkzeugträger-Einsatz kann Befestigungsmittel zum Halten eines in ihm eingesetzten Werkzeugs, beispielsweise radial oder axial zustellbare Klemmschrauben oder seinerseits eine Spannzange, aufweisen. Somit können unterschiedlichste Werkzeuge an der erfindungsgemäßen Vorrichtung angebracht werden, wobei in vorteilhafter Weise jeweils die konische Aufnahmeöffnung für die Spannzange verwendet werden kann. Entsprechende Werkzeugträger-Einsätze können bereits mit den jeweiligen Werkzeugen vorbereitet vorliegen und entsprechend schnell gegen zuvor benutzte derartige Werkzeuge und Werkzeugträger-Einsätze oder eine Spannzange ausgetauscht werden.

Es sei noch erwähnt, dass der Werkzeugträger-Einsatz im Bereich seines unrunden Querschnitts einen über die axiale Ausdehnung dieses Bereichs konstanten Querschnitt haben kann, wie auch die unrunde Stelle in den konischen Verlauf der konischen Aufnahmeöffnung gestaltet sein kann. Entsprechend einfach ist die Herstellung dieses Bereichs, wobei aber nicht über die gesamte Höhe oder axiale Ausdehnung dieses Bereichs überall Berührung mit der Aufnahmeöffnung bestehen muss.

Es sei noch erwähnt, dass die drehbare Aufnahme des Werkzeugs einen Drehantrieb haben oder mit einem Drehantrieb kuppelbar sein kann. Viele derartige Vorrichtungen haben einen Drehantrieb, damit das Werkzeug selbst bei seiner schneidenden Wirkung rotiert. Es sind aber auch Anwendungen denkbar und möglich, bei denen das Werkzeug nicht drehangetrieben ist. Auch bei solchen Ausführungsformen kann die erfindungsgemäße Anordnung zur Anwendung kommen.

Vor allem bei Kombinationen einzelner oder mehrerer der vorbeschriebenen Merkmale und Maßnahme ergibt sich eine Vorrichtung mit einer Aufnahme für ein spanendes Werkzeug, bei welcher ein sehr schneller Werkzeugwechsel und Wechsel von Werkzeugträger-Einsätzen möglich ist. Vor allem kann die Befestigung für die jeweils gegeneinander austauschbaren Spannzangen auch für die Werkzeugträger-Einsätze verwendet werden, wobei bei entsprechenden Abmessungen die normalen außenliegenden oder innenliegenden Spannmuttern oder Spannschrauben mitbenutzt werden können. Auch sind dabei alle Standard-Muttern nach wie vor einsetzbar. Ferner bleiben auch die Dichtscheiben in diesem Bereich in übereinstimmenden Abmessungen benutzbar. Über die unrunden Stellen und Bereiche oder das Polygon sind hohe Drehmomente übertragbar und sprunghafte Querschnittsveränderungen werden vermieden. Die gegeneinander auszutauschenden Spannzangen und Werkzeugträger-Einsätze haben dabei im Bereich der Aufnahmeöffnung höchste Präzision, was der Rundlaufgenauigkeit förderlich ist, obwohl ein Schnellwechselsystem vorliegt und keine zusätzlichen Schrauben mit Schraubenlöchern verlangt. Vorteilhaft ist außerdem, dass praktisch keine Durchmesserabhängigkeit vorliegt, also keinerlei Einschränkung des Durchmessers der Werkzeuge und Schneidwerkzeuge vorhanden ist.

Nachstehend sind Ausführungsbeispiele der Erfindung anhand der Zeichnung näher beschrieben. Es zeigt in zum Teil schematisierter Darstellung:
- Figur 1: einen Längsschnitt einer erfindungsgemäßen Vorrich- tung mit einer Aufnahme für ein spanendes Werkzeug, wobei eine drehantreibbare Welle als Fortsetzung eine konische Aufnahmeöffnung für eine Spannzange hat, so dass mit der Spannzange ein Werkzeug fest- gelegt werden kann, wobei aber gleichzeitig in die konische Aufnahmeöffnung ein Werkzeugträger-Einsatz passt,
- Figur 2: eine Seitenansicht des Endbereiches der Vorrichtung mit einer zum Fixieren der Spannzange oder eines Werkzeugträger-Einsatzes in der konischen Aufnahme- öffnung dienenden Überwurfmutter,
- Figur 3: in schaubildlicher Darstellung einen Teillängs- schnitt der Vorrichtung gemäß Figur 1 mit einge- setzter Spannzange,
- Figur 4: eine Explosionsdarstellung des Bereiches mit der Aufnahmeöffnung, der Spannzange und der Überwurf- mutter vor ihrer Zusammenfügung,
- Figur 5: einen Längsschnitt des Aufnahmebereiches der Vorrichtung für einen Werkzeugträger-Einsatz mit eingefügter Spannzange,
- Figur 6: einen Teilquerschnitt im Bereich einer unrunden polygonalen Stelle der konischen Aufnahmeöffnung gemäß der Schnittlinie VI-VI in Figur 5,
- Figur 7: eine Seitenansicht der Vorrichtung im Bereich der Werkzeugaufnahme, wobei anstelle der Spannzange ein Werkzeugträger-Einsatz vorgesehen ist,
- Figur 8: eine perspektivische Teilschnitt-Darstellung der Anordnung gemäß Figur 7,
- Figur 9: eine Explosionsdarstellung der Anordnung gemäß Fi- gur 7 und 8, wobei die Überwurfmutter mittels eines Ringes in axialer Richtung an dem Werkzeugträger- Einsatz angreift und zu dem Gewinde der Spannzan- genbefestigung passt,
- Figur 10: einen Längsschnitt der Anordnung gemäß Figur 7,
- Figur 11: einen Längsschnitt des Aufnahmebereichs der Vorrichtung für ein Werkzeug mit einem gegenüber Figur 7 bis 10 abgewandelten Werkzeugträger-Ein- satz, der einen Bohrer hält,
- Figur 12: einen Längsschnitt, bei welchem in der konischen Aufnahmeöffnung für die Spannzange ein Werkzeugträ- ger-Einsatz angeordnet ist, der seinerseits eine Spannzange aufweist,
- Figur 13: einen Längsschnitt mit wiederum abgewandeltem Werk- zeugträger-Einsatz, der wie der Spannzangeneinsatz gemäß Figur 12 den Querschnitt der Überwurfmutter überragt, so dass diese Überwurfmutter mit einem sie axial festlegenden Ring unterhalb der Quer- schnittserweiterung drehbar angeordnet ist,
- Figur 14: eine abgewandelte Ausführungsform, bei welcher eine Spannzange und der in Figur 14 dargestellte Werk- zeugträger-Einsatz mit einer ein Außengewinde auf- weisenden Druckschraube fixiert ist,
- Figur 15: einen wiederum abgewandelten Werkzeugträger-Ein- satz, der mit einer mit einem Ring in axialer Rich- tung fixierten Druckschraube festlegbar ist,
- Figur 16: einen gegenüber Figur 15 abgewandelten Werkzeugträ- ger-Einsatz, der ebenfalls eine mit einem Ring in axialer Richtung festgelegte Druckschraube hat,
- Figur 17: einen Werkzeugträger-Einsatz mit einer Spannzange, der mit einer Druckschraube an einem Innengewinde festgelegt ist, mit der auch eine Spannzange fest- legbar ist,
- Figur 18: einen Werkzeugträger-Einsatz analog dem gemäß Figur 17, wobei die Befestigung dieses Werkzeugträger- Einsatzes mit der Überwurfmutter erfolgt, mit der die in die Aufnahmeöffnung passende Spannzange festlegbar ist,
- Figur 19: einen abgewandelten Werkzeugträger-Einsatz, der seinerseits eine konische Aufnahme für eine Spann- zange hat, welcher mit einer Druckschraube festleg- bar ist, die mit einem Befestigungsring in axialer Richtung fixiert ist, sowie
- Figur 20: eine Ausführungsform analog Figur 19, wobei zur Fi- xierung eine mit einem Ring in axialer Richtung festgelegte Überwurfmutter vorgesehen ist.

Bei der nachfolgenden Beschreibung unterschiedlicher Ausführungsbeispiele erhalten hinsichtlich ihrer Funktion übereinstimmende Teile auch bei abgewandelter Formgebung übereinstimmende Bezugszahlen.

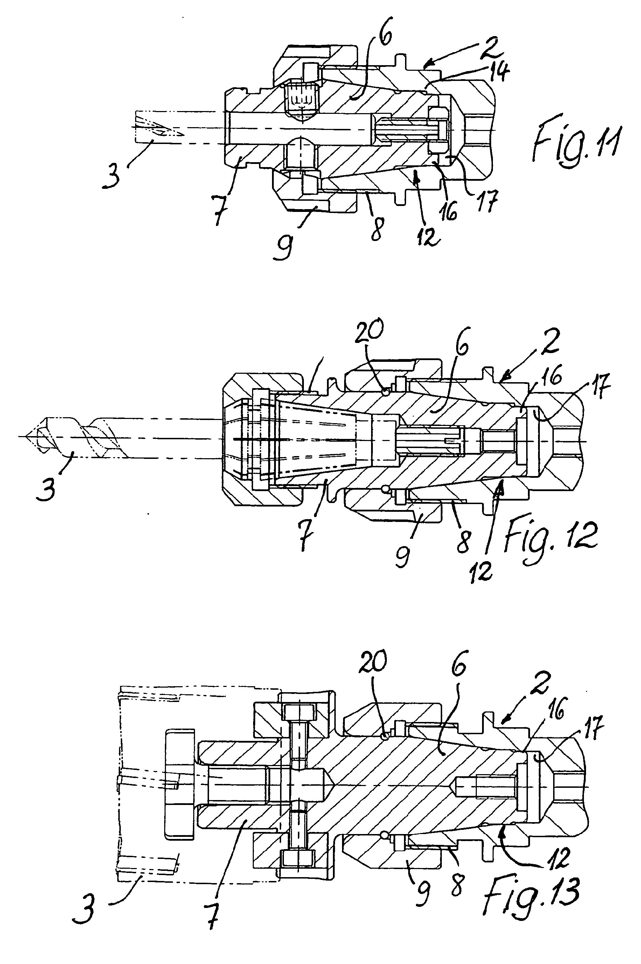

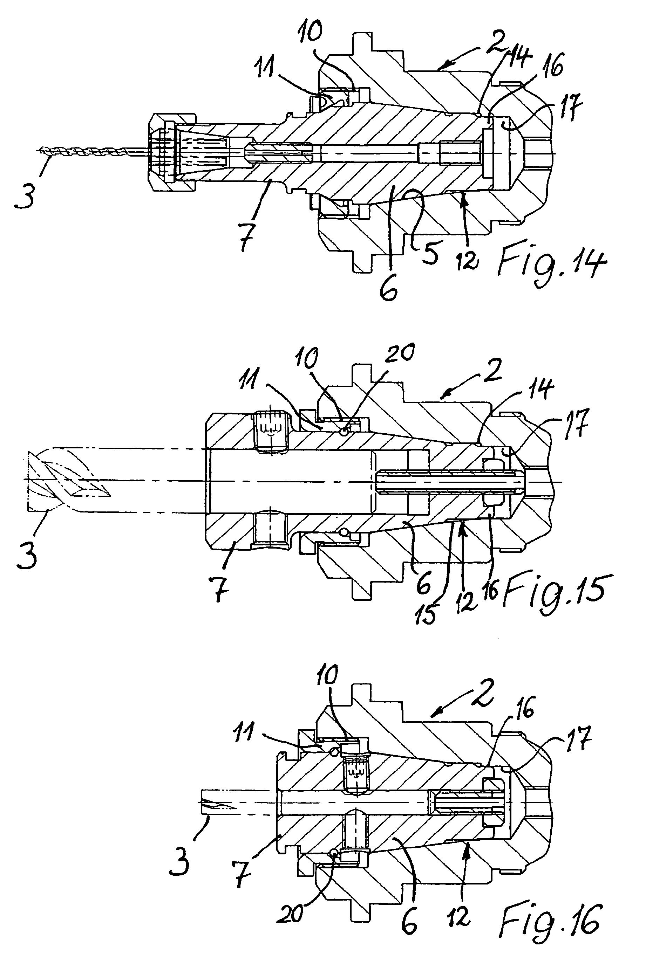

Eine im Ganzen mit 1 bezeichnete Vorrichtung weist eine im Ganzen mit 2 bezeichnete Aufnahme für ein spanendes Werkzeug 3 auf, wobei Beispiele für verschiedene derartige spanende Werkzeuge 3 in den Figuren 11 bis 16 dargestellt sind. Wichtig ist, dass die Vorrichtung 1 die Aufnahme unterschiedlicher Werkzeuge 3 ermöglicht, die möglichst schnell gewechselt werden können sollen.

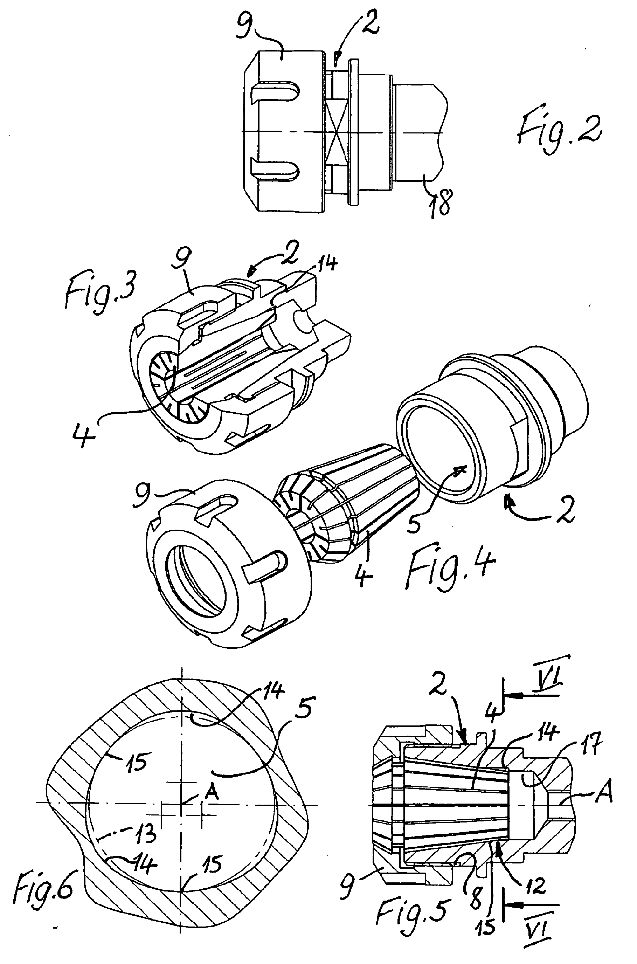

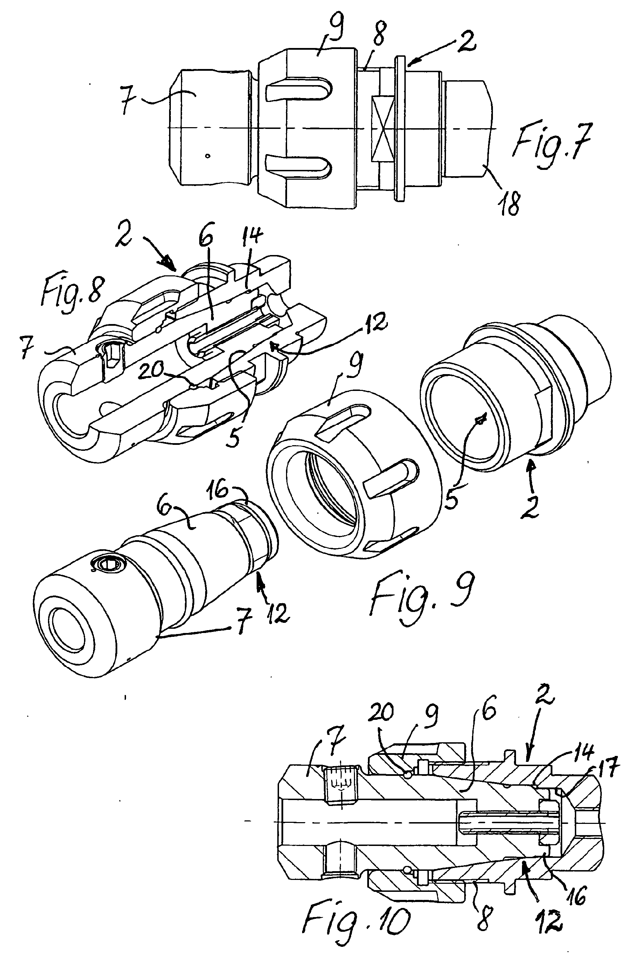

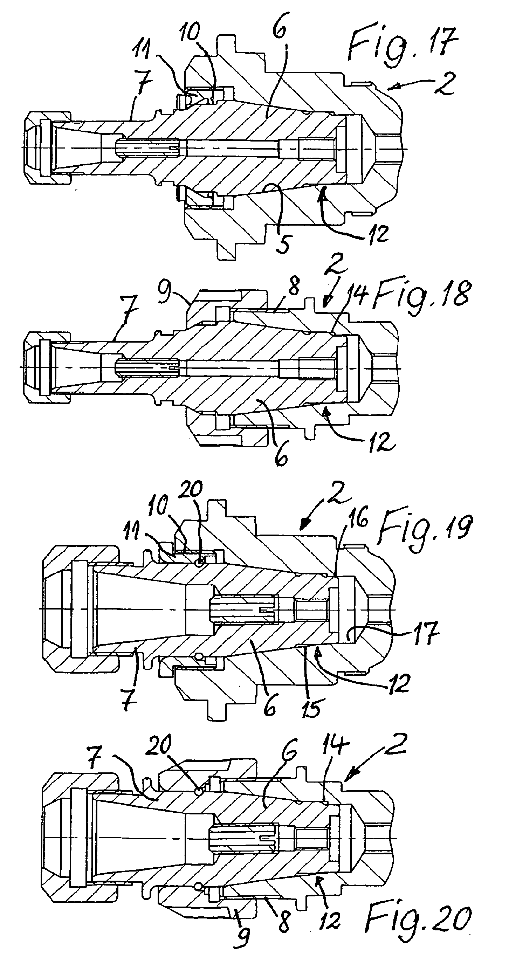

Gemäß Figur 2 bis 5 gehört zu der Vorrichtung 1 eine Spannzange 4 zum Fixieren eines derartigen Werkzeugs 3 und eine im Folgenden noch näher zu beschreibende Spannzangenbefestigung, wobei die Spannzange 4 in eine konische Aufnahmeöffnung 5 der Aufnahme 2 passt, welche Aufnahme 5 wahlweise die Spannzange 4 oder gemäß den Figuren 7 bis 20 einen Konusabschnitt 6 eines Werkzeugträger-Einsatzes 7 aufnimmt.

Wie aus den genannten Figuren ersichtlich, kann dabei dieser Werkzeugträger-Einsatz 7 unterschiedlich gestaltet und an das jeweils von ihm zu haltende Werkzeug 3 angepasst sein.

Die Aufnahme 2 in Vorrichtung 1 weist außerdem eine Drehmomentenübertragung mit Formschluss für den Werkzeugträger-Einsatz 7 auf, der vor allem bei gleichzeitiger Betrachtung der Figuren 5, 6 und beispielsweise 9 erkennbar und im Folgenden noch beschrieben wird.

Anhand der Figuren erkennt man, dass der in die konische Aufnahmeöffnung 5 für die Spannzange 4 passende Konusabschnitt 6 der verschiedenen Werkzeugträger-Einsätze 7 so gestaltet ist, dass er in Gebrauchsstellung zumindest mit Hilfe eines zu der Spannzangenbefestigung gehörenden Gewindes 8, eines Außengewindes für eine Überwurfmutter 9 oder eines Innengewindes 10 für eine Druckschraube 11, festlegbar ist.

Als Drehmomentenübertragung haben die konische Aufnahmeöffnung 5 und der formschlüssig in diese passende Konusabschnitt 6 an in Montagestellung übereinstimmender Stelle 12 und somit in derselben Tiefe der konischen Aufnahmeöffnung 5 einen formschlüssig zusammenpassenden unrunden Querschnitt, der in Figur 6 angedeutet ist. Dabei verdeutlicht Figur 6, dass die konische Aufnahmeöffnung 5 zur Bildung der unrunden Stelle 12 gegenüber dem eigentlichen kreisrunden Querschnitt 13 an dieser Stelle Querschnittserweiterungen 14 hat, in welche entsprechende Formen des Werkzeugträger-Einsatzes 7 passen und in Gebrauchsstellung gemäß Figur 8 bis 20 eingreifen.

Gemäß Figur 5 und 6 sind am Umfang der konischen Aufnahmeöffnung 5 innerhalb von deren konischen Verlauf im Bereich oder an der Stelle 12 Erweiterungen 14 oder Ausfräsungen vorgesehen, deren Wandung gemäß Figur 5 im Längsschnitt koaxial und parallel zur Mittelachse A der Vorrichtung 1 verläuft, also im Verlauf der Querschnittsverminderung der konischen Aufnahmeöffnung 5 von diesem ursprünglich konischen Verlauf einen zunehmenden Abstand hat.

Anhand der Figur 6 und 9 wird deutlich, dass der unrunde Bereich für die Drehmomentenübertragung im Querschnitt als polygon mit drei im Winkel zueinander angeordneten, balligen Flächen ausgebildet ist, wobei die den Eckbereichen des Polygons zwischen den balligen Flächen im Querschnitt entsprechenden Bereiche die Erweiterungen 14 des Querschnitts des konischen Bereichs der Aufnahmeöffnung 5 sind. Der jeweilige Werkzeugträger-Einsatz 7 hat ein in Gebrauchsstellung in diesen Bereich zumindest teilweise formschlüssig passendes Polygon, so dass eine Drehmomentenübertragung mittels Polygon verwirklicht ist, die im Maschinenbau an sich allgemein bekannt ist. Die Besonderheit liegt darin, dass diese polygone Ausbildung in einem eigentlich konischen Bereich vorgesehen ist.

Die polygone unrunde Stelle 12 der konischen Aufnahmeöffnung 5 hat gemäß Figur 6 drei abgerundete Eckbereiche, wobei die Abrundung so stark ist, dass wirkliche Ecken praktisch nicht mehr vorhanden sind. Das Polygon ist an sich bekannter Weise durch Bereiche mit geringerem Krümmungsradius entsprechend den Seiten des Polygons und Bereichen mit kleinerem Krümmungsradius entsprechend den Ecken gebildet. Zwischen den Eckbereichen befindet sich somit jeweils ein balliger Flächenbereich, der zumindest einer Mantellinie 15 eine Fortsetzung der konischen Aufnahmeöffnung 5 bildet und eine in die Aufnahmeöffnung 5 eingesetzte Spannzange 4 somit auch in diesem polygonal gestalteten Querschnittsbereich 12 berührt, wie es der untere Teil der Querschnittsdarstellung der Figur 5 zeigt.

Die im Querschnitt unrunde Stelle 12, also das Polygon, ist an denjenigem Ende der konischen Aufnahmeöffnung 5 angeordnet, welches den geringsten Querschnitt hat, also das Einsteckende der konischen Aufnahmeöffnung 5 bildet. Dabei hat die konische Aufnahmeöffnung 5 an ihrem entgegengesetzten offenen axialen Ende wie auch in ihrem übrigen Verlauf bis auf den unrunden Bereich 12 einen kreisrunden Querschnitt.

Die mit unrundem Querschnitt ausgebildete Stelle 12 reicht bis zu dem Ende der konischen Aufnahmeöffnung 5 und ist mit diesem Ende selbst beendet oder abgeschlossen. Gegebenenfalls kann sich jedoch noch ein Zentrierring 16 axial anschließen, der in eine zylindrische Öffnung 17 passt, die in Fortsetzung der konischen Aufnahmeöffnung 5 vorgesehen ist und deren Durchmesser dem kleinsten Durchmesser der konischen Aufnahmeöffnung 5 etwa entspricht. Man erkennt diese Ausbildung und Wirkungsweise im Zusammenwirken mit einem Werkzeugträger-Einsatz 7 z.B. in Figur 10, während die Spannzange 4 keinen derartigen Zentrierring 16 hat.

Der in die konische Aufnahmeöffnung 5 für die Spannzange 4 jeweils passende Werkzeugträger-Einsatz 7 ist, wie schon kurz erwähnt, so gestaltet, dass er mit Hilfe desjenigen Gewindes 8 oder 10 der Spannzangenbefestigung in Gebrauchsstellung festlegbar ist, mit welchem die Spannzange 4 selbst in der Aufnahmeöffnung 5 befestigbar ist. Somit ist der Befestigungsaufwand beim Werkzeugwechsel sehr gering, wenn anstelle eines von der Spannzange 4 gehaltenen Werkzeugs 3 ein solches eingesetzt werden soll, das von einem Werkzeugträger-Einsatz 7 gehalten wird, weil dann lediglich die übliche Befestigung für die Spannzange zu öffnen und nach Einfügen des Werkzeugträger-Einsatzes 7 wieder zu schließen und festzuschrauben ist. Spezielle Befestigungselemente in Anpassung an den jeweiligen Werkzeugträger-Einsatz 7 und insbesondere dafür vorgesehene besondere Gewindelöcher werden vermieden.

Dabei ist in den Ausführungsbeispielen gemäß Figur 11, 14, 17 und 18 vorgesehen, dass der in die konische Aufnahmeöffnung 5 passende Werkzeugträger-Einsatz 7 so gestaltet ist, dass er mit Hilfe der zum Befestigen der Spannzange 4 in der konischen Aufnahmeöffnung 5 dienenden Verschraubung, also mit einer zu einem im Bereich der Aufnahmeöffnung 5 angeordneten Gegengewinde 8 passenden Überwurfmutter 9 oder mit einer zu einem als Innengewinde gestalteten Gegengewinde 10 passenden Druckschraube 11 festlegbar ist. Somit können die für die Befestigung der Spannzange 4 dienenden Schraubelemente unverändert auch zum Befestigen der entsprechenden Werkzeugträger-Einsätze 7 benutzt werden, ohne dass es besonderer zusätzlicher Vorkehrungen für die Fixierung bedarf.

In den Figuren 7 bis 10, 12, 13, 15, 16, 19 und 20 sind hingegen Werkzeugträger-Einsätze 7 dargestellt, die in ihrem aus der Aufnahme 2 überstehenden axialen Abschnitt einen größeren Querschnitt haben, als der Querschnitt der Durchgangsöffnung einer Überwurfmutter 9 oder Druckschraube 11 zur Befestigung der Spannzange 4 ist. In diesem Falle ist an dem jeweiligen Werkzeugträger-Einsatz 7 eine Spannschraube oder Druckschraube 11 oder Überwurfmutter 9 vorgesehen, die in axialer Richtung mittels eines Halterings 20 in axialer Richtung festliegend aber drehbar gehalten wird. Das Gewinde dieser Schrauben 9 und 11 passt dabei wieder zu dem Gewinde 8 und 10 der Verschraubung für die Spannzange 4.

Während also bei den Ausführungsbeispielen gemäß Figur 11, 14, 17 und 18 die Überwurfmutter 9 oder die Druck- oder Spannschraube 11 über den in seinem Querschnitt entsprechend klein gehaltenen Werkzeugträger-Einsatz 7 aufsteckbar und verschraubbar ist, sind bei den einen größeren Querschnitt aufweisenden Werkzeugträger-Einsätzen 7 Vorkehrungen betreffend die Überwurfmutter 9 und/oder die Druckschraube 11 zu treffen, damit diese dennoch ihre axiale Haltefunktion erfüllen können. In jedem Falle passen sie aber auch zu den Gewinden 8 und 10 und erlauben einen entsprechend schnellen Wechsel des jeweiligen Werkzeugeinsatzes 7 mit seinem Werkzeug 3. Die Aufnahme 2 und die gesamte Vorrichtung 1 können also für unterschiedlichste Werkzeuge 3 mit den zugehörigen Werkzeugträger-Einsätzen 7 genutzt werden, ohne dass aufwendige zusätzliche Befestigungsmittel wie zum Beispiel in radialer Richtung einsetzbare Schrauben oder stirnseitig neben der Aufnahmeöffnung 5 anbringbare Schraubenlöcher erforderlich sind.

Aus den Figuren 7 bis 20 sind unterschiedlichste Werkzeugträger-Einsätze erkennbar und es wird deutlich, dass dabei praktisch alle gängigen Werkzeugträger-Einsätze für unterschiedlichste insbesondere schneidende Werkzeuge 3 möglich sind.

Dabei ist in den Figuren 12 und 17 bis 20 dargestellt, dass der jeweilige Werkzeugträger-Einsatz 7 Befestigungsmittel zum Halten eines in ihm eingesetzten Werkzeugs 3 in Form einer weiteren Spannzange aufweisen kann, während andere Figuren andere Befestigungsmittel wie beispielsweise radial oder axial zustellbare Klemmschrauben zeigen.

Es sei noch erwähnt, dass der Werkzeugträger-Einsatz 7 im Bereich seines unrunden Querschnitts einen über die axiale Ausdehnung dieses Bereichs 12 konstanten Querschnitt haben kann, um eine relativ einfache Herstellung zu erlauben und eine in axialer Richtung ausreichend große Anpassung an die Querschnittserweiterungen 14 zu ermöglichen.

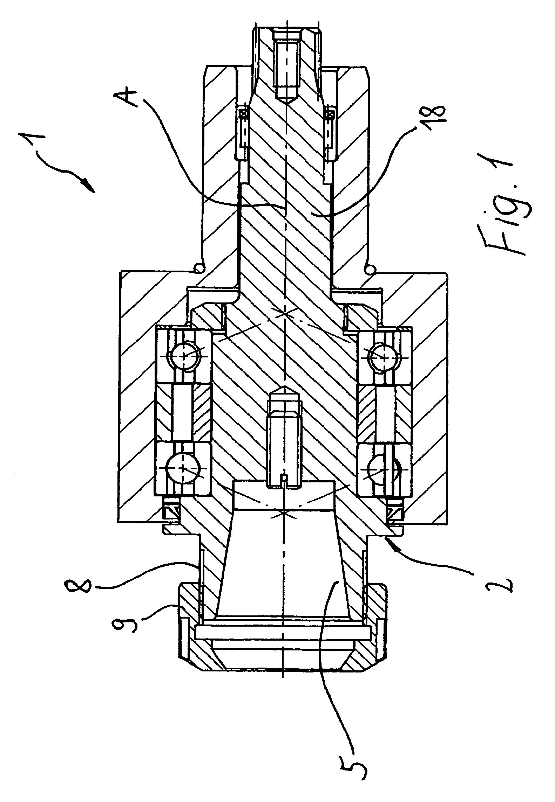

Gemäß Figur 1 ist eine drehbare Aufnahme 2 mit Welle 18 vorgesehen, die mit einem Drehantrieb kuppelbar ist.

Die Vorrichtung 1 mit einer Aufnahme 2 für ein spanendes Werkzeug 3 hat eine konische Aufnahmeöffnung 5, in welche eine Spannzange 4 zum Halten eines derartigen Werkzeuges 3 passt. In diese Aufnahmeöffnung 5 kann wahlweise die Spannzange 4 oder ein Konusabschnitt 6 eines Werkzeugträger-Einsatzes 7 eingesetzt werden, um einen Werkzeugwechsel durchzuführen. Dabei ist für den Werkzeugträger-Einsatz 7 eine Drehmomentenübertragung mit Formschluss vorgesehen. Für einen schnellen und einfachen Werkzeugwechsel ist der in die konische Aufnahmeöffnung 5 passende Konusabschnitt 6 des Werkzeugträger-Einsatzes 7 so gestaltet, dass er in Gebrauchsstellung zumindest mit Hilfe des Gewindes 8 oder 10 der Spannzangenbefestigung festlegbar ist, so dass keine besonderen Schraubenlöcher oder dergleichen erforderlich sind. Als Drehmomentenübertragung weist die konische Aufnahmeöffnung 5 und der formschlüssig zu dieser passende Konusabschnitt 6 an einer in Montagestellung übereinstimmenden Stelle 12 oder in derselben Tiefe einen formschlüssig zusammenpassenden unrunden Querschnitt, bevorzugt einen Polygon-Querschnitt auf.

## Patentansprüche

1. Satz bestehend aus einer Spannzange (4), einem Werkzeugträger-Einsatz (7) und einer Vorrichtung (1) zur Aufnahme der Spannzange (4) oder des Werkzeugträger-Einsatzes (7) mit einer eine konische Aufnahmeöffnung (5) aufweisenden Aufnahme (2) für ein spanendes Werkzeug (3), wobei zu der Vorrichtung (1) die Spannzange (4) zum Fixieren des Werkzeugs (3) und eine Spannzangenbefestigung gehören, wobei die Spannzange (4) in die konische Aufnahmeöffnung (5) passt, welche wahlweise die Spannzange (4) oder einen Konusabschnitt (6) des Werkzeugträger-Einsatzes (7) aufnimmt, und wobei für den Werkzeugträger-Einsatz (7) eine Drehmomentenübertragung mit Formschluss vorgesehen ist, **dadurch gekennzeichnet, dass** der in die konische Aufnahmeöffnung (5) für die Spannzange (4) passende Konusabschnitt (6) des Werkzeugträger-Einsatzes (7) so gestaltet ist, dass er in Gebrauchsstellung zumindest mit Hilfe des Gewindes (8, 10) der Spannzangenbefestigung festlegbar ist, und dass als Drehmomentenübertragung die konische Aufnahmeöffnung (5) für die Spannzange einerseits und der formschlüssig in diese passende Konusabschnitt (6) des Werkzeugträger-Einsatzes andererseits an in Montagestellung übereinstimmender Stelle (12) oder in der selben Tiefe einen formschlüssig zusammenpassenden unrunden Querschnitt haben, wobei die konische Aufnahmeöffnung zur Bildung der unrunden Stelle (12) wenigstens eine Querschnittserweiterung (14) hat.

2. Satz nach Anspruch 1, **dadurch gekennzeichnet, dass** am Umfang der konischen Aufnahmeöffnung (5) innerhalb von deren konischen Verlauf oder Bereich zur Bildung einer unrunden Stelle oder eines unrunden Bereichs wenigstens eine Erweiterung (14) oder Ausfräsung vorgesehen ist, deren Wandung eine geringere Konizität als die konische Aufnahmeöffnung (5) hat und/oder eine zur Mittelachse (A) koaxiale gekrümmte Fläche bildet.

3. Satz nach Anspruch 1 oder 2, **dadurch gekennzeichnet, dass** der unrunde Bereich für die Drehmomentenübertragung im Querschnitt als Polygon mit wenigstens drei im Winkel zueinander angeordneten, insbesondere balligen Flächen ausgebildet ist, wobei die den Eckbereichen des Polygons zwischen den balligen Flächen im Querschnitt entsprechenden Bereiche die Erweiterung (14) oder Ausfräsung des Querschnitts des konischen Bereichs der Aufnahmeöffnung (5) sind, und dass der Werkzeugträger-Einsatz (7) ein in Gebrauchsstellung zumindest in diesem Bereich formschlüssig dazu passendes Polygon hat.

4. Satz nach einem der Ansprüche 1 bis 3, **dadurch gekennzeichnet, dass** die polygonale unrunde Stelle (12) der konischen Aufnahmeöffnung (5) wenigstens drei abgerundete Eckbereiche aufweist, zwischen denen in Umfangsrichtung dieses polygonalen Querschnitts insbesondere ballige Flächenbereiche verlaufen, die jeweils zumindest bezüglich einer Mantellinie (15) Fortsetzungen der konischen Aufnahmeöffnung (5) sind und eine in die Aufnahmeöffnung (5) eingesetzte Spannzange (4) in diesem polygonal gestalteten Querschnittsbereich (12) berühren.

5. Satz nach einem der Ansprüche 1 bis 4, **dadurch gekennzeichnet, dass** die im Querschnitt unrunde Stelle (12) an demjenigen Ende der konischen Aufnahmeöffnung (5) angeordnet ist, welches den geringsten Querschnitt hat.

6. Satz nach einem der Ansprüche 1 bis 5, **dadurch gekennzeichnet, dass** die konische Aufnahmeöffnung (5) an ihrem offenen axialen Ende einen kreisrunden Querschnitt hat.

7. Satz nach Anspruch 5 oder 6, **dadurch gekennzeichnet, dass** die mit unrundem Querschnitt ausgebildete Stelle (12) bis zu dem Ende der konischen Aufnahmeöffnung (5) reicht und durch dieses Ende abgeschlossen ist.

8. Satz nach einem der Ansprüche 1 bis 7, **dadurch gekennzeichnet, dass** in Fortsetzung der konischen Aufnahmeöffnung (5) eine zylindrisch gestaltete Öffnung (17) vorgesehen ist, deren Durchmesser dem kleinsten Durchmesser der konischen Aufnahmeöffnung (5) entspricht.

9. Satz nach einem der Ansprüche 1 bis 8, **dadurch gekennzeichnet, dass** der in die konische Aufnahmeöffnung (5) für die Spannzange (4) passende Werkzeugträger-Einsatz (7) so gestaltet ist, dass er mit Hilfe desjenigen Gewindes (8, 10) der Spannzangenbefestigung in Gebrauchsstellung festlegbar ist, mit welchem die Spannzange (4) in der Aufnahmeöffnung (5) befestigbar ist.

10. Satz nach einem der Ansprüche 1 bis 9, **dadurch gekennzeichnet, dass** der in die konische Aufnahmeöffnung (5) passende Werkzeugträger-Einsatz (7) so gestaltet ist, dass er mit Hilfe der zum Befestigen der Spannzange (4) in der konischen Aufnahmeöffnung (5) dienenden Verschraubung, insbesondere mit einer zu einem im Bereich der Aufnahmeöffnung (5) angeordneten Gegengewinde (8) passenden Überwurfmutter (9) oder einer zu einem Gegengewinde (10) passenden Druckschraube (11) festlegbar ist.

11. Satz nach einem der Ansprüche 1 bis 10, **dadurch gekennzeichnet, dass** für Werkzeugträger-Einsätze (7), die in ihrem aus der Aufnahme (2) überstehenden axialen Abschnitt einen größten Querschnitt haben, welcher gleich oder kleiner als der Querschnitt der Durchgangsöffnung einer Überwurfmutter (9) oder Druckschraube (11) zur Befestigung der Spannzange (4) ist, dieselbe zur Befestigung der Spannzange (4) dienende Überwurfmutter (9) oder Druckschraube (11) auch zur Befestigung des Werkzeugträger-Einsatzes (7) vorgesehen ist.

12. Satz nach einem der Ansprüche 1 bis 11, **dadurch gekennzeichnet, dass** der Werkzeugträger-Einsatz (7), der an seinem aus der Aufnahme (2) überstehenden axialen Abschnitt einen größeren Querschnitt als der Durchgang durch die Druckschraube (11) oder Überwurfmutter (9) hat, an diesem eine Druckschraube oder Überwurfmutter (9) in axialer Richtung mittels Haltering (20) fixierte Druckschraube (11) oder Überwurfmutter (9) drehbar und axial festliegend aufweist, deren Gewinde zu dem Gewinde der Überwurfmutter (9) oder Druckschraube (11) für die Befestigung der Spannzange (4) passt.

13. Satz nach einem der Ansprüche 1 bis 12, **dadurch gekennzeichnet, dass** der Werkzeugträger-Einsatz (7) Befestigungsmittel zum Halten eines in ihm eingesetzten Werkzeugs (3), beispielsweise radial oder axial zustellbare Klemmschrauben oder seinerseits eine Spannzange aufweist.

14. Satz nach einem der Ansprüche 1 bis 13, **dadurch gekennzeichnet, dass** der Werkzeugträger-Einsatz (7) im Bereich seines unrunden Querschnitts einen über die axiale Ausdehnung dieses Bereichs (12) konstanten Querschnitt hat.

15. Satz nach einem der vorstehenden Ansprüche, **dadurch gekennzeichnet, dass** die drehbare Aufnahme (2) des Werkzeugs (3) einen Drehantrieb hat oder mit einem Drehantrieb kuppelbar ist.

## Claims

1. A set comprising a collet chuck (4), a tool carrier insert (7) and a device (1) for mounting the collet chuck (4) or the tool carrier insert (7) with a holder (2) for a cutting tool (3) comprising a conical receiving opening (5), wherein the collet chuck (4) for fixing the tool (3) and a collet-chuck fixing device belong to the device (1), wherein the collet chuck (4) fits into the conical receiving opening (5), which optionally receives the collet chuck (4) or a cone section (6) of the tool carrier insert (7), wherein a torque transmission with a form-fit connection is provided for the tool carrier insert (7), **characterised in that** the cone section (6) of the tool carrier insert (7) fitting into the conical receiving opening (5) for the collet chuck (4) is configured such that it can be fixed at least with the aid of the thread (8, 10) of the collet chuck fixing device in the position of use, and that, as a torque transmission, the conical receiving opening (5) for the collet chuck on the one hand and the cone section (6) of the tool carrier insert fitting in a form-fit manner into the latter on the other hand have a non-round cross-section matching in a form-fit manner at the coinciding point (12) in the assembly position or at the same depth, wherein the conical receiving opening has at least one cross-sectional widening (14) for the formation of the non-round point (12).

2. The set according to claim 1, **characterised in that**, at the periphery of the conical receiving opening (5) within its conical course or in a region for the formation of a non-round point or a non-round region, a widening (14) or countersinking is provided, the wall whereof has a lesser conicity than the conical receiving opening (5) and/or forms a curved surface coaxial with the central axis (A).

3. The set according to claim 1 or 2, **characterised in that** the non-round region for the torque transmission is configured in cross-section as a polygon with three, in particular, crowned surfaces disposed at an angle to one another, wherein the regions corresponding in cross-section to the corner regions of the polygon between the crowned surfaces are the widening (14) or countersinking of the cross-section of the conical region of the receiving opening (5), and that the tool carrier insert (7) has a polygon matching therewith in a form-fit manner at least in said region in the position of use.

4. The set according to any one of claims 1 to 3, **characterised in that** the polygonal non-round point (12) of the conical receiving opening (5) comprises at least three rounded-off corner regions, between which in particular crowned surface regions run in the peripheral direction of this polygonal cross-section, said crowned surface regions each being continuations of the conical receiving opening (5) at least with respect to a lateral surface line (15) and making contact with a collet chuck (4) inserted into the receiving opening (5) in this polygonal-shaped cross-sectional region (12).

5. The set according to any one of claims 1 to 4, **characterised in that** the cross-sectionally non-round point (12) is disposed at the end of the conical receiving opening (5) which has the smallest cross-section.

6. The set according to any one of claims 1 to 5, **characterised in that** the conical receiving opening (5) has a circular cross-section at its open axial end.

7. The set according to claim 5 or 6, **characterised in that** the point (12) constituted with a non-round cross-section extends up to the end of the conical receiving opening (5) and is closed off by this end.

8. The set according to any one of claims 1 to 7, **characterised in that** a cylindrically shaped opening (17) is provided in the continuation of the conical receiving opening (5), the diameter of which cylindrically shaped opening corresponds to the smallest diameter of the conical receiving opening (5).

9. The set according to any one of claims 1 to 8, **characterised in that** the tool carrier insert (7) fitting into the conical receiving opening (5) for the collet chuck (4) is configured such that it can be fixed in the position of use with the aid of the thread (8, 10) of the collet chuck fixing device, with which thread the collet chuck (4) is fixed in the receiving opening (5).

10. The set according to any one of claims 1 to 9, **characterised in that** the tool carrier insert (7) fitting into the conical receiving opening (5) is configured such that it can be fixed with the aid of the screw connection serving to fix the collet chuck (4) in the conical receiving opening (5), in particular with a union nut (9) matching a counter-thread (8) disposed in the region of the receiving opening (5) or a pressure screw (11) matching a counter-thread (10).

11. The set according to any one of claims 1 to 10, **characterised in that**, for the tool carrier inserts (7), which have a greatest cross-section in their axial portion projecting out of the holder (2) which is the same as or smaller than the cross-section of the through-opening of a union nut (9) or a pressure screw (11) for fixing the collet chuck (4), the same union nut (9) or pressure screw (11) serving to fix the collet chuck (4) is also provided for fixing the tool carrier insert (7).

12. The set according to any one of claims 1 to 11, **characterised in that** the tool carrier insert (7), which at its axial portion projecting out of the holder (2) has a larger cross-section than the passage through the pressure screw (11) or the union nut (9), comprises in a rotatable and axially fixed manner on said axial portion a pressure screw (11) or a union nut (9) fixed in the axial direction by means of a retaining ring (20), the thread whereof matches the thread of the union nut (9) or pressure screw (11) for fixing the collet chuck (4).

13. The set according to any one of claims 1 to 12, **characterised in that** the tool carrier insert (7) comprises fixing means for holding a tool (3) inserted into it, for example radially or axially adjustable locking screws or, for its part, a collet chuck.

14. The set according to any one of claims 1 to 13, **characterised in that** the tool carrier insert (7), in the region of its non-round cross-section, has a constant cross-section over the axial extension of this region (12).

15. The set according to any one of the preceding claims, **characterised in that** the rotatable holder (2) of the tool (3) has a rotary drive or can be coupled with a rotary drive.

## Revendications

1. Ensemble composé d'un mors d'ablocage (4), d'une pièce intégrée (7) porte-outils et d'un dispositif (1) qui est conçu pour recevoir ledit mors d'ablocage (4), ou ladite pièce intégrée (7) porte-outils, et présente un logement (2) muni d'un orifice tronconique de réception (5) et dédié à un outil (3) d'enlèvement de copeaux, ledit dispositif (1) incluant le mors d'ablocage (4) dévolu à la consignation à demeure dudit outil (3), et un système de fixation dudit mors d'ablocage, lequel mors d'ablocage (4) s'adapte dans ledit orifice tronconique de réception (5) recevant, sélectivement, ledit mors d'ablocage (4) ou une région tronconique (6) de la pièce intégrée (7) porte-outils, sachant qu'une transmission de couples de rotation, par complémentarité de formes, est prévue pour ladite pièce intégrée (7) porte-outils, **caractérisé par le fait que** la région tronconique (6) de la pièce intégrée (7) porte-outils, s'adaptant dans l'orifice tronconique de réception (5) assigné au mors d'ablocage (4), est configurée de façon telle qu'elle puisse être bloquée, en position d'utilisation, au moins à l'aide du filetage (8, 10) du système de fixation dudit mors d'ablocage ; et **par le fait que**, pour matérialiser la transmission de couples de rotation, d'une part ledit orifice tronconique de réception (5) assigné au mors d'ablocage et, d'autre part, ladite région tronconique (6) de la pièce intégrée porte-outils qui s'adapte dans ledit orifice par complémentarité de formes, sont pourvus, dans une zone (12) concordante en position de montage, ou à la même profondeur, d'une section transversale non circulaire s'adaptant par complémentarité de formes, sachant que ledit orifice tronconique de réception comporte au moins un élargissement (14) de section transversale, en vue de former la zone (12) non circulaire.

2. Ensemble selon la revendication 1, **caractérisé par le fait qu'**au moins un élargissement (14) ou une dépouille fraisée, dont la paroi présente une conicité moins accentuée que celle de l'orifice tronconique de réception (5) et/ou forme une surface courbe coaxiale à l'axe médian (A), est prévu(e) sur le pourtour dudit orifice tronconique de réception (5), à l'intérieur du tracé ou de la région tronconique de ce dernier, afin de former une zone non circulaire ou une région non circulaire.

3. Ensemble selon la revendication 1 ou 2, **caractérisé par le fait que** la région non circulaire dévolue à la transmission de couples de rotation est réalisée, en coupe transversale, sous la forme d'un polygone comptant au moins trois surfaces notamment bombées, disposées avec inclinaison les unes par rapport aux autres, sachant que les régions correspondant, en coupe transversale, aux zones d'angle dudit polygone qui sont situées entre lesdites surfaces bombées, se présentent comme l'élargissement (14) ou la dépouille fraisée de la section transversale de la région tronconique de l'orifice de réception (5) ; et **par le fait que** la pièce intégrée (7) porte-outils est munie d'un polygone s'adaptant par complémentarité de formes, en position d'utilisation, au moins dans cette région.

4. Ensemble selon l'une des revendications 1 à 3, **caractérisé par le fait que** la zone (12) de l'orifice tronconique de réception (5), polygonale et non circulaire, comporte au moins trois zones d'angle arrondies entre lesquelles s'étendent, dans la direction du pourtour de cette section transversale polygonale, des régions superficielles notamment bombées qui se présentent respectivement, au moins vis-à-vis d'une génératrice (15), comme des prolongements dudit orifice tronconique de réception (5) et sont en contact, dans cette zone (12) de section transversale de configuration polygonale, avec un mors d'ablocage (4) inséré dans ledit orifice de réception (5).

5. Ensemble selon l'une des revendications 1 à 4, **caractérisé par le fait que** la zone (12), de section transversale non circulaire, est située à l'extrémité de l'orifice tronconique de réception (5) qui est dotée de la plus petite section transversale.

6. Ensemble selon l'une des revendications 1 à 5, **caractérisé par le fait que** l'orifice tronconique de réception (5) présente une section transversale circulaire à son extrémité axiale ouverte.

7. Ensemble selon la revendication 5 ou 6, **caractérisé par le fait que** la zone (12), réalisée avec section transversale non circulaire, s'étend jusqu'à l'extrémité de l'orifice tronconique de réception (5) et cette extrémité marque l'achèvement de ladite zone.

8. Ensemble selon l'une des revendications 1 à 7, **caractérisé par le fait qu'**un orifice (17) de configuration cylindrique, dont le diamètre correspond au diamètre minimal de l'orifice tronconique de réception (5), est prévu dans le prolongement dudit orifice tronconique de réception (5).

9. Ensemble selon l'une des revendications 1 à 8, **caractérisé par le fait que** la pièce intégrée (7) porte-outils, s'adaptant dans l'orifice tronconique de réception (5) assigné au mors d'ablocage (4), est configurée de façon telle qu'elle puisse être bloquée, en position d'utilisation, à l'aide du filetage (8, 10) qui est ménagé sur le système de fixation dudit mors d'ablocage, et au moyen duquel ledit mors d'ablocage (4) peut être fixé dans ledit orifice de réception (5).

10. Ensemble selon l'une des revendications 1 à 9, **caractérisé par le fait que** la pièce intégrée (7) porte-outils, s'adaptant dans l'orifice tronconique de réception (5), est configurée de façon telle qu'elle puisse être bloquée à l'aide du système de vissage servant à fixer ledit mors d'ablocage (4) dans ledit orifice tronconique de réception (5), notamment par un capuchon taraudé (9) s'ajustant sur un filetage complémentaire (8) situé dans la région dudit orifice de réception (5), ou par une vis de pression (11) s'adaptant à un filetage complémentaire (10).

11. Ensemble selon l'une des revendications 1 à 10, **caractérisé par le fait que**, dans le cas de pièces intégrées (7) porte-outils présentant, dans leur région axiale dépassant hors du logement (2), une section transversale maximale égale ou inférieure à la section transversale de l'ouverture de passage d'un capuchon taraudé (9) ou d'une vis de pression (11) dévolu(e) à la fixation du mors d'ablocage (4), le même capuchon taraudé (9) ou la même vis de pression (11), servant à fixer ledit mors d'ablocage (4), est prévu(e) pour fixer également la pièce intégrée (7) porte-outils.

12. Ensemble selon l'une des revendications 1 à 11, **caractérisé par le fait que** la pièce intégrée (7) porte-outils présentant, dans sa région axiale dépassant hors du logement (2), une section transversale supérieure à celle du passage traversant la vis de pression (11) ou le capuchon taraudé (9), est pourvue, dans ladite région, d'une vis de pression (11) ou d'un capuchon taraudé (9) qui est consigné(e) à demeure dans la direction axiale au moyen d'une bague d'arrêt (20), avec faculté de rotation et avec immobilisation axiale, et dont le filetage s'adapte au filetage du capuchon taraudé (9) ou de la vis de pression (11) dévolu(e) à la fixation du mors d'ablocage (4).

13. Ensemble selon l'une des revendications 1 à 12, **caractérisé par le fait que** la pièce intégrée (7) porte-outils offre des moyens de fixation conçus pour retenir un outil (3) inséré dans ladite pièce, par exemple des vis de coincement réglables radialement ou axialement, ou est à son tour équipée d'un mors d'ablocage.

14. Ensemble selon l'une des revendications 1 à 13, **caractérisé par le fait que** la pièce intégrée (7) porte-outils présente, dans la région de sa section transversale non circulaire, une section transversale constante sur l'étendue axiale de cette région (12).

15. Ensemble selon l'une des revendications précédentes, **caractérisé par le fait que** le logement tournant (2), dédié à l'outil (3), présente un entraînement en rotation ou peut être couplé à un entraînement en rotation.
